# EUROPÄISCHE PATENTSCHRIFT

(11) **EP 3 064 755 B1**
(45) Veröffentlichungstag und Bekanntmachung des Hinweises auf die Patenterteilung: **19.12.2018**
(21) Anmeldenummer: 16156827.4
(22) Anmeldetag: 23.02.2016
(51) Int. Cl.: F02M 21/02, F02B 19/10

(54) **ZYLINDERKOPF**
CYLINDER HEAD
CULASSE DE CYLINDRE

(30) Priorität: 27.02.2015 AT 501612015
(43) Veröffentlichungstag der Anmeldung: 07.09.2016
(73) Patentinhaber: GE Jenbacher GmbH & Co. OG, 6200 Jenbach (AT)
(72) Erfinder: Jacob, Raphael, 85276 Pfaffenhofen (Ilm) (DE)
(74) Vertreter: Torggler & Hofinger Patentanwälte

(56) Entgegenhaltungen:
- EP-A1- 2 816 216
- DE-A1- 10 020 719
- JP-A- H04 171 256
- JP-A- 2007 255 313
- US-A- 3 406 667

## Beschreibung

Die Erfindung betrifft einen Zylinderkopf mit einem Vorkammergasventil mit den Merkmalen des Oberbegriffs von Anspruch 1.

Ab einer bestimmten Bohrung (in etwa 150 mm) werden (Gas-) Brennkraftmaschinen mit einer Vorkammer zur Zündverstärkung ausgestattet. Eine in die Vorkammer ragende Zündquelle entzündet das dort vorliegende, bei gespülter Vorkammer relativ fette Gemisch, wodurch Zündfackeln von der Vorkammer in einen Hauptbrennraum treten und das dort vorliegende Gemisch entzünden.

Zur Brennstoffversorgung von Vorkammern bestehen verschiedene Konzepte. Bei ungespülten Vorkammern wird im Verdichtungstakt Gemisch aus dem Hauptbrennraum in die Vorkammer gedrückt.

Bei gespülten Vorkammern besteht darüber hinaus die Möglichkeit, die Vorkammer zusätzlich mit Brennstoff zu versorgen. Diese separate Brennstoffversorgung geschieht über ein Vorkammergasventil. Dieses kann im Zylinderkopf direkt oder in einer Zündkerzenhülse angeordnet sein.

Ein gattungsgemäßer Zylinderkopf sind ist aus dem Stand der Technik bekannt. So zeigt die DE 10 2004 016 260 (CATERPILLAR MOTOREN GMBH) einen Gasmotor mit Vorkammer, in welche über einen Kanal (3) Gas einströmt. Bei dem dargestellten Zylinderkopf (1) des Gasmotors ist eine gespülte Vorkammer (2) und ein getrennter Gaszuführkanal (3) zur Versorgung eines Brennraums (4) mit Gas für die Zündenergie angeordnet, wobei der übliche Zündprozess über eine Zündkerze (8) erfolgt. In dem Gaszuführkanal (3) ist ein Magnetventil (5) in einen Aufnahmebereich (6) angeordnet und der Auslass mündet direkt in den Brennraum (4).

Die EP0480545 (YANMAR DIESEL ENGINE CO) zeigt ein Vorkammergasventil, welches über einen Kanal (18) mit Treibgas versorgt wird. Das Gas tritt über gegenüberliegende Bohrungen in einen Hohlraum (138), von dem bei geöffnetem Ventil das Gas in die Vorkammer übertritt.

Nachteilig an der dort gezeigten Anordnung sind der erhöhte Platzbedarf sowie der Aufwand zur Bauteilausrichtung (lagerichtige Winkelorientierung zur Gewährleistung des Gasdurchganges).

Die JP H04171256 A zeigt ein Ventil mit Ventilkörper, Ventilfeder, einer Ventilnadel und einem unteren gasbeaufschlagten Raum. Ebenso ist ein oberer Raum vorhanden, in dem die Ventilfeder angeordnet ist. Das Gas wird dem Ventil seitlich zugeführt. Eine etwa radial gerichtete Bohrung mündet in einen sehr schmalen Ringkanal. Von diesem führen radial angeordnete Bohrungen zur Ventilnadel.

In der US 2,667,155 A wird ein Vorkammergasventil beschrieben, welches einen zweiteiligen Ventilkörper, eine Ventilfeder und eine Ventilnadel besitzt. Der untere Ventilraum ist durch Gas beaufschlagt und im oberen Ventilraum sitzt die Ventilfeder. Auch hier gelangt das Gas über radiale Bohrungen in einen schmalen Ringspalt und weiter in das Ventilgehäuse hinein.

Weitere Durch den Stand der Technik bekannte Vorkammergassysteme sind aus den Schriften EP 2816216 A1, DE 10020719 A1, JP 2007255313 A und US 3406667 A bekannt.

Aufgabe der vorliegenden Erfindung ist einen gegenüber dem Stand der Technik verbesserten Zylinderkopf mit einem Vorkammergasventil anzugeben.

Gelöst wird diese Aufgabe durch einen Zylinderkopf mit einem Vorkammergasventil nach Anspruch 1. Vorteilhafte Ausführungsformen sind in den abhängigen Ansprüchen angegeben.

Vorteile der Erfindung sind insbesondere:
- strömungstechnisch günstiges Einströmen von Brenngas in das Vorkammergasventil über den Ringkanal
- Stabiler Ventilkörper durch kompakte Bauweise ohne zusätzliche Gasführungen
- Symmetrie in der unteren Kavität des Ventils auch bei seitlicher Einströmung über den Gaszufuhrkanal möglich (bei mehr als einem Kanal)
- keine definierte Winkellage bezüglich der Längsachse des Vorkammergasventils bei Einbau erforderlich

Bevorzugt kann vorgesehen sein, dass der Winkel des Gaskanals zur Symmetrieachse des Ventilkörpers 20° bis 70° beträgt. Durch eine solche Lage dieses Gaskanales lassen sich besonders gute Stabilitäten des Vorkammergasventiles, durch eine stabile Form, erzeugen. Auch der strömungstechnische Verlauf des zugeführten Brenngases wird dadurch optimiert, dass keine spitzen Winkel durchströmt werden müssen. Für die Herstellung eines solchen Gaskanals kann es vorgesehen sein, dass eine Flanke des Ringkanales schräg (dem Ventilkörper zugeneigt) angeordnet ist. Dies kann beispielsweise so gewählt werden, dass die schräg liegende Flanke des Ringkanales in einem rechten Winkel zur Achse des Gaskanals steht. Durch dies kann eine fertigungstechnische Erleichterung beim Bohren des Gaskanals hervorgerufen werden. Besonders bevorzugt kann vorgesehen sein, dass der Winkel des Gaskanals zur Symmetrieachse des Ventilkörpers 20° bis 30° beträgt.

Bevorzugt kann vorgesehen sein, dass der Ringkanal durch zwei bis zu sechs Gaskanälen mit einer unteren Kavität des Vorkammergasventils verbunden ist. Dadurch kann eine optimale Füllung der unteren Kavität des Vorkammergasventils, im strömungstechnischen sowie im zeitlichen Hinblick, realisiert werden. Außerdem wird damit eine weitgehend symmetrische Strömung im Inneren des Ventilkörpers erreicht.

Es ist vorgesehen, dass in den Zylinderkopf eine Zündkerzenhülse eingesetzt ist, sodass die mit dem Vorkammergasventil einen Ringkanal bildende Wandung der Kavität durch die Wandung der Zündkerzenhülse gebildet wird. Dies beschreibt den Fall, bei dem das Vorkammergasventil nicht direkt in den Zylinderkopf eingesetzt wird, sondern in einer Zündkerzenhülse angeordnet ist.

Es kann vorgesehen sein, dass im Vorkammergasventil wenigstens ein Gaskanal vorgesehen ist, welcher den Ringkanal mit einer unteren Kavität des Vorkammergasventils verbindet. Es ist also im Ventilkörper des Vorkammergasventils mindestens ein Gaskanal ausgebildet. Durch diesen Gaskanal wird im Betrieb des Vorkammergasventils Brenngas vom Ringkanal in Richtung Ventilsitz des Vorkammergasventils geleitet. Der Ventilkörper des Vorkammergasventils übernimmt also in Form des Gaskanals die Leitung des Brenngases vom Ringkanal zum Ort der Entnahme beim Ventilsitz. Diese Konstruktion hat sich als besonders vorteilhaft herausgestellt.

Es kann vorgesehen sein, dass zwischen dem Sitz des Ventiltellers des Vorkammergasventils und der Einmündung des Vorkammergasventils in die Vorkammer bzw. zwischen dem Sitz des Ventiltellers des Vorkammergasventils und der Einmündung des Vorkammergasventils in den Kanal ein Raum vorgesehen ist.

Dies beschreibt den Fall, worin der Ventilteller des Vorkammergasventils nicht direkt an die Vorkammer bzw. an den zur Vorkammer führenden Kanal anschließt, sondern dazwischen ein Hohlraum ausgebildet ist. Durch Vorsehen dieses Raums wird eine besonders günstige Einströmung des Gases aus dem Vorkammergasventil in die Vorkammer (bei bündiger Anordnung des Vorkammergasventils mit der Vorkammer) bzw. in den Kanal (bei beabstandeter Anordnung des Vorkammergasventils) erreicht.

Bevorzugt kann vorgesehen sein, dass der Raum eine weitestgehend birnenförmige, sich zur Vorkammer hin verjüngende Gestalt aufweist. So kann die Einströmung von Gas aus dem Vorkammergasventil in die Vorkammer bzw. in den Kanal günstig beeinflusst und dennoch das Volumen klein gehalten werden.

Es kann vorgesehen sein, dass das Vorkammergasventil an seiner Außenkontur wenigstens einen Vorsprung aufweist, dessen dem Ringkanal zugewandte Flanke den Ringkanal mitbegrenzt und an dessen anderer Flanke ein Dichtmittel zur Abdichtung des Vorkammergasventils gegenüber der Bohrung anliegt.

Damit wird auf besonders vorteilhafte Weise eine Bauteilintegration erreicht. Der Ringkanal kann eine radiale Tiefe entsprechend der Höhe des Vorsprunges aufweisen, tiefer oder aber auch weniger tief sein. Orientiert man sich an der Höhe des Vorsprunges, erlaubt dies eine wenig gestörte Geometrie des Ventilgrundkörpers. Als Dichtmittel kommt beispielsweise ein O-Ring in Frage, der das Vorkammergasventil radial gegenüber der Bohrung abdichtet. Es können natürlich noch weitere Vorsprünge vorgesehen sein, die weitere Dichtmittel aufnehmen können.

Es kann vorgesehen sein, dass im Zylinderkopf eine Zündkerze angeordnet ist, wobei die Zündkerze und das Vorkammergasventil in einer gemeinsamen Kavität des Zylinderkopfes angeordnet sind. Dies ist besonders vorteilhaft im Hinblick auf eine kompakte Bauweise. Bevorzugt sind dabei die Zündkerze und das Vorkammergasventil in einander durchdringenden Bohrungen angeordnet. Auf diese Weise können die Zündkerze und das Vorkammergasventil noch platzsparender verbaut werden.

Die Erfindung wird durch die Figuren näher erläutert. Dabei zeigt:
- Fig, 1a bis 1c: Einen Zylinderkopf mit Zündkerzenhülse
- Fig. 2a bis 2c: eine Zündkerzenhülse für einen Zylinderkopf
- Fig. 3a bis 3c: eine weitere Zündkerzenhülse für einen Zylinderkopf
- Fig. 4a bis 4e: Details zum Gaszufuhrkonzept
- Fig. 5a, 5b: ein Vorkammergasventil und eine Variante hierzu.

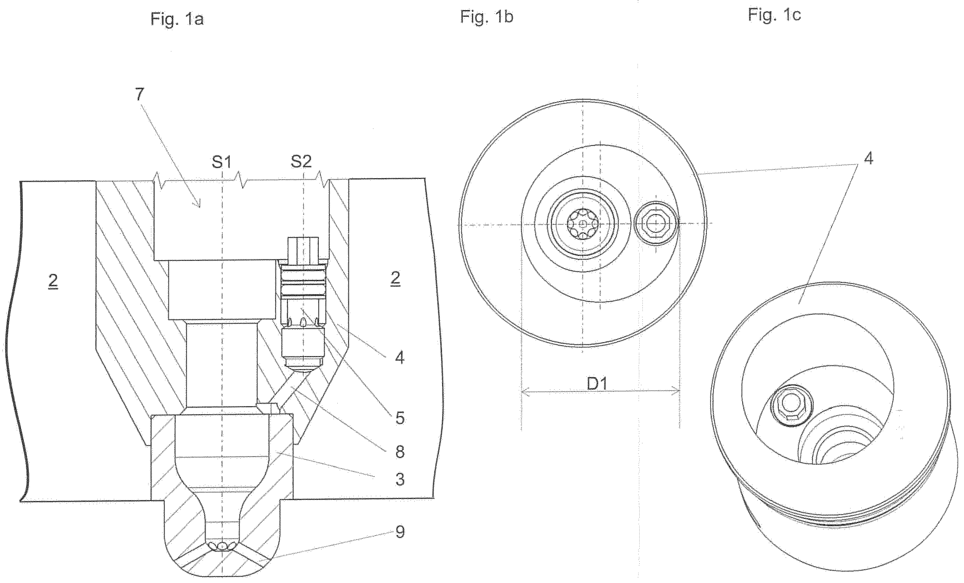

Figur 1a zeigt einen Zylinderkopf 2 mit einer in den Zylinderkopf 2 eingesetzten Zündkerzenhülse 4. Eine Kavität 7 ist in diesem Ausführungsbeispiel durch die Zündkerzenhülse 4 gebildet.

Figuren 1b und 1c zeigen die Zündkerzenhülse 4 in zwei Ansichten,

Fig. 1a zeigt einen Längsschnitt durch die Kavität 7, welche eine Zündkerze 6 (nicht gezeigt) und ein Vorkammergasventil 5 aufnimmt.
Die Kavität 7 umfasst einerseits einen um die Symmetrieachse S1 konzentrischen Schacht aus Zylinderabschnitten zur Aufnahme einer Zündkerze 6.

Die Kavität 7 weist weiters eine Bohrung 10 mit Symmetrieachse S2 zur Aufnahme eines Vorkammergasventils 5 auf.

Vom Vorkammergasventil 5 führt ein Kanal 8 zur Vorkammer 3. Die Vorkammer 3 besteht einerseits aus der eigentlichen Kavität, also dem Hohlraum, in dem die Entflammung von Gemisch stattfindet. Die Vorkammer 3 ist freilich auch ein physisches Bauteil. In der vorliegenden Ausführungsform ist die Vorkammer 3 als ein der Zündkerzenhülse 4 separates Bauteil ausgeführt und wird mit der Zündkerzenhülse 4 verbunden, beispielsweise verpresst.

Die der Übersichtlichkeit halber nicht gezeigte Zündkerze 6 wird über den zur Symmetrieachse S1 konzentrischen Schacht in die Zündkerzenhülse 4 so eingeführt, dass sie mit der Vorkammer 3 bündig abschließt und ihre Elektroden in die Vorkammer 3 ragen. Die Vorkammer 3 wird vom Vorkammergasventil 5 über den Kanal 8 mit Brenngas angereichert. Nach der Zündung in der Vorkammer 3 tritt entflammtes Gemisch über die Überströmbohrungen 9 in den Hauptbrennraum (nicht gezeigt).

Fig. 1b zeigt eine Draufsicht der Darstellung von Fig. 1a. Zu erkennen sind die innerhalb der Kavität 7 liegenden parallelen zylindrischen Schächte zur Aufnahme einer Zündkerze 6 sowie eines Vorkammergasventils 5. Die Zündkerze 6 ist wie anhand der Fig. 1a erläutert nicht gezeigt. Beim Vorkammergasventil 5 zu erkennen ist ein Achtkant, mit dem das Vorkammergasventil 5 in die Zündkerzenhülse 4 eingeschraubt wird. Im vorliegenden Ausführungsbeispiel existiert ein größter Bohrungsdurchmesser D1 der Kavität 7, welcher in einer Draufsicht die Bohrungen zur Aufnahme der Zündkerze 6 und des Vorkammergasventils 5 umschreibt. In anderen Worten besteht in diesem Ausführungsbeispiel ein gemeinsamer Schacht für Zündkerze 6 und Vorkammergasventil 5.

Die Mittellinie jener größten Bohrung mit Durchmesser D1 liegt zwischen den Symmetrieachsen S1 und S2. Der gemeinsame Schacht hat Vorteile in der Montage von Zündkerze 6 und Vorkammergasventil 5, schwächt allerdings Zündkerzenhülse 4, da nur noch wenig Wandstärke überbleibt.

Fig. 1c zeigt eine perspektivische Ansicht der Zündkerzenhülse 4 dieses Ausführungsbeispiels.

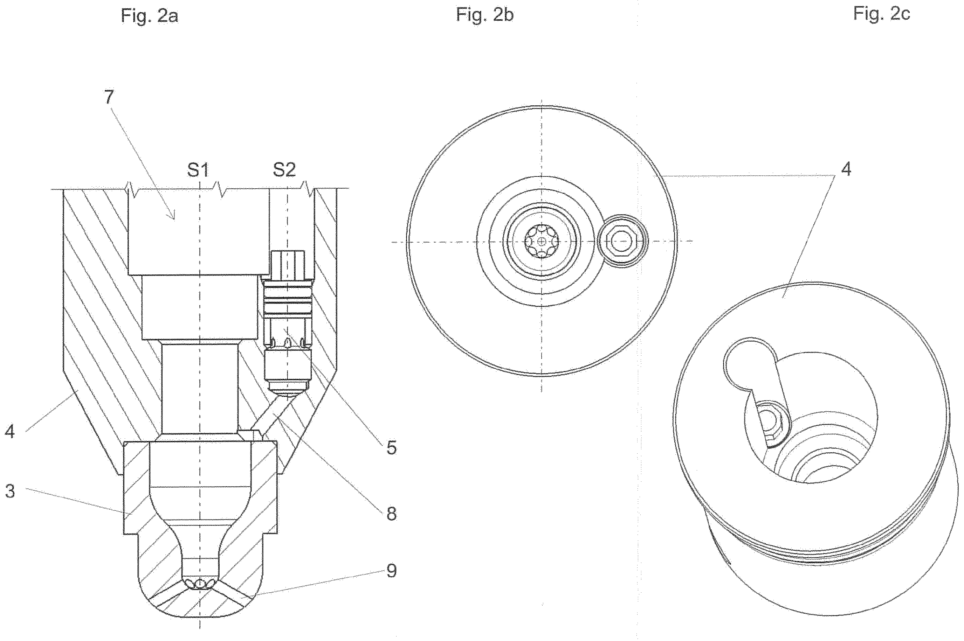

Figuren 2a bis 2c zeigen verschiedene Ansichten einer Zündkerzenhülse 4 zum Einsetzen in einen Zylinderkopf 2 (nicht gezeigt) nach einem weiteren Ausführungsbeispiel. Auch hier ist die Kavität 7 durch die Zündkerzenhülse 4 gebildet.

Während im Ausführungsbeispiel gemäß der Figuren 1a bis 1c die Kavität 7 einen zylindrischen Abschnitt aufweist, der bei seinem größten Durchmesser sowohl die Bohrung zur Aufnahme der Zündkerze als auch die Bohrung zur Aufnahme des Vorkammergasventils 5 umschreibt, so umfasst im vorliegenden Ausführungsbeispiel der größte Durchmesser der Kavität 7 die Bohrung der Zündkerzenhülse 4 nicht mehr zur Gänze. Vielmehr durchdringt die Bohrung 10 des Vorkammergasventils 5 die Zündkerzenbohrung 11 im deren oberem Abschnitt mit dem größten Durchmesser. Dies wird besonders deutlich in den Darstellungen von Figur 2b und Figur 2c. In einer Draufsicht (Figur 2b) überlappen also die Bohrung 10 zur Aufnahme des Vorkammergasventils 5 und die Bohrung zur Aufnahme der Zündkerze 6.

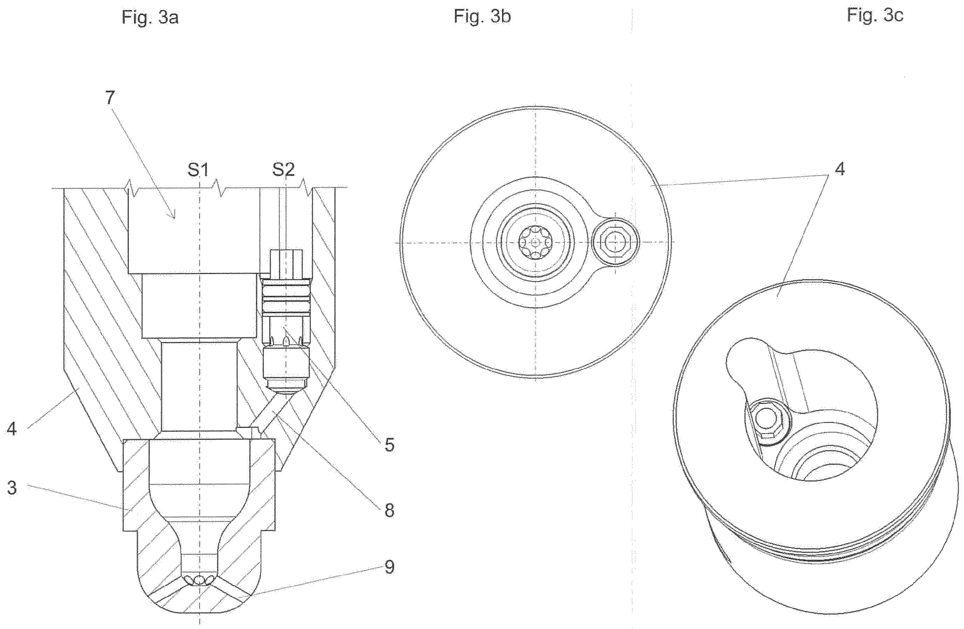

Figuren 3a bis 3c zeigen ein weiteres Ausführungsbeispiel einer Zündkerzenhülse 4 zum Einsetzen in einen Zylinderkopf 2 (nicht gezeigt). Auch hier ist die Kavität 7 durch die Zündkerzenhülse 4 gebildet.

Hier ist die Bohrung zur Aufnahme des Vorkammergasventils 5 ebenfalls nicht von einem größten Durchmesser der Kavität 7 umschrieben. In anderen Worten durchdringen sich auch hier die Bohrungen zur Aufnahme einer Zündkerze 6 und zur Aufnahme des Vorkammergasventils 5. Im Vergleich zu dem Ausführungsbeispiel nach Figuren 2a bis 2c ist hier die Kontur der Kavität 7 verändert. Die Kontur der Kavität 7 ist hier so ausgestaltet, dass die zylindrischen Bohrungen zur Aufnahme der Zündkerze 6 und des Vorkammergasventils 5 fließend ineinander übergehen. In anderen Worten sind die scharfen Übergänge des Ausführungsbeispiels nach Figuren 2a bis 2c hier durch einen sanften Radius im Übergang der zwei Bohrungen ersetzt.

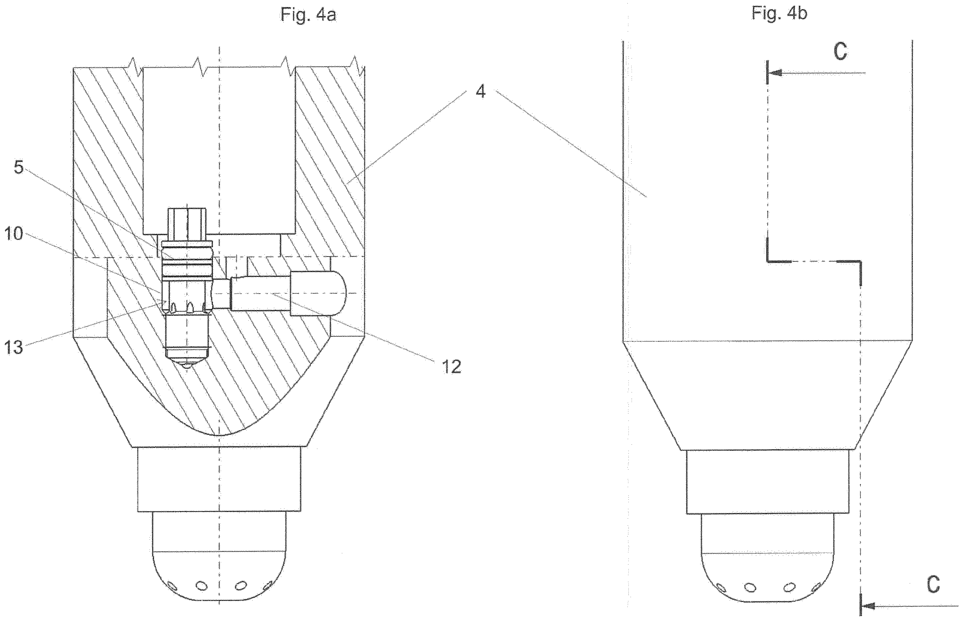

Fig. 4a zeigt einen Schnitt durch eine Zündkerzenhülse 4, wobei der Schnitt solchermaßen gelegt wurde, dass die Gaszuführung an das Vorkammergasventil 5 deutlich wird. Die Schnittführung ist in Fig. 4b skizziert. Ein Gaszufuhrkanal 12 mündet in einen Ringkanal 13, welcher zwischen einer das Vorkammergasventil 5 umgebenden Wandung 10 und der Außenkontur des Vorkammergasventils 5 gebildet ist. In anderen Worten bildet die Bohrung 10 zusammen mit dem Vorkammergasventil 5 einen Ringkanal 13, in welchen der Gaszufuhrkanal 12 mündet.

Aus dem von der Wandung 10 und dem Vorkammergasventil 5 gebildeten Ringkanal 13 wird das einströmende Gas gleichmäßig in das Vorkammergasventil 5 geleitet.

Im hier gezeigten Ausführungsbeispiel wird ist die Wandung 10 wieder von der Wandung der Zündkerzenhülse 4 gebildet.

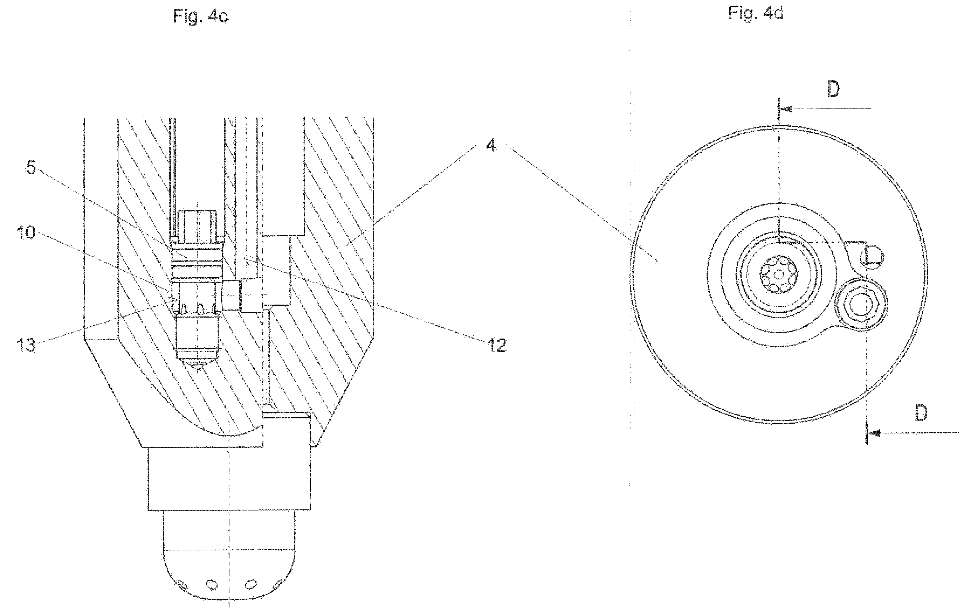

Fig. 4c zeigt einen Längsschnitt durch die Zündkerzenhülse 4. Die Schnittführung geht aus der Fig. 4d hervor. Wie in Fig. 4c ersichtlich, die Schnittführung ist hier so gewählt, dass auch der parallel zur Symmetrieachse S1 verlaufende Teil des Gaszufuhrkanals 12 erkennbar ist.

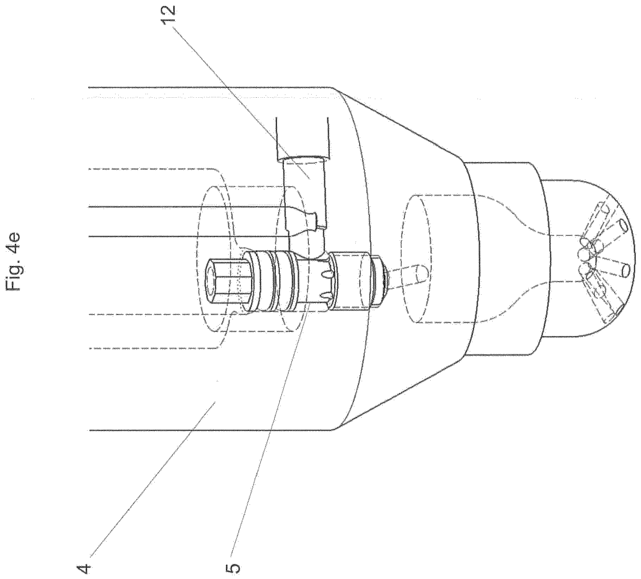

Fig. 4e zeigt in einer perspektivischen, isometrischen Ansicht die Anordnung von Vorkammergasventil 5 und dessen Gasversorgung. Die Gasversorgung erfolgt erfindungsgemäß durch den horizontalen und den vertikalen Abschnitt des Gaszufuhrkanales 12.

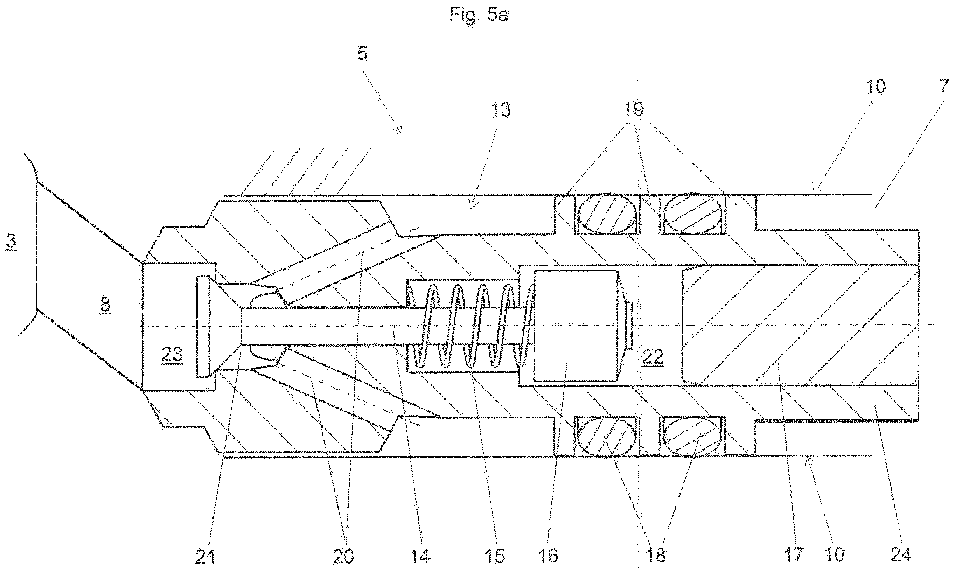

Fig. 5a zeigt eine Schnittdarstellung eines Vorkammergasventiles 5. Das Vorkammergasventil kann in eine von einem Zylinderkopf 2 (hier nicht gezeigt) oder in eine von einer Zündkerzenhülse 4 (hier nicht gezeigt) gebildeten Kavität 7 eingesetzt werden. Die Kavität 7 ist also eine Ausnehmung, die entweder in einem Zylinderkopf 2 direkt oder in einer Zündkerzenhülse 4 ausgebildet ist und welche ein Vorkammergasventil 5 aufnehmen kann.

Gut erkennbar ist der Ringkanal 13, der zwischen der Wandung 10 der Kavität 7 und der Außenkontur des Vorkammergasventils 5 gebildet ist. Die Wandung 10 kann entweder von dem Zylinderkopf 2 selbst gebildet sein oder von einer in den Zylinderkopf 2 eingesetzten Zündkerzenhülse 4. Dieser Möglichkeit wurde anhand der Ausführungsbeispiele gemäß den Figuren 1-4 erläutert.

Die Ventilnadel 14 wird von der Feder 15 gegen ihren Sitz verspannt. Die Kappe 16 umgreift die Feder 15 und ist mit der Ventilnadel 14 beispielsweise über eine Strahlschweißung verbunden.

Der Stopfen 17 verschließt und dichtet das Vorkammergasventil 5 nach oben hin ab.

Die Dichtung des Ringkanals 13 gegenüber der Kavität 7 erfolgt radial über die O-Ringe 18. Diese sind in von den Vorsprüngen 19 gebildeten, ringförmigen Aufnahmen angeordnet. Das Dichtkonzept des hier gezeigten Vorkammergasventils 5 sieht also vor, dass die Dichtung des Vorkammergasventils 5 radial, d. h. über die Außenfläche des Vorkammergasventils 5 erfolgt.

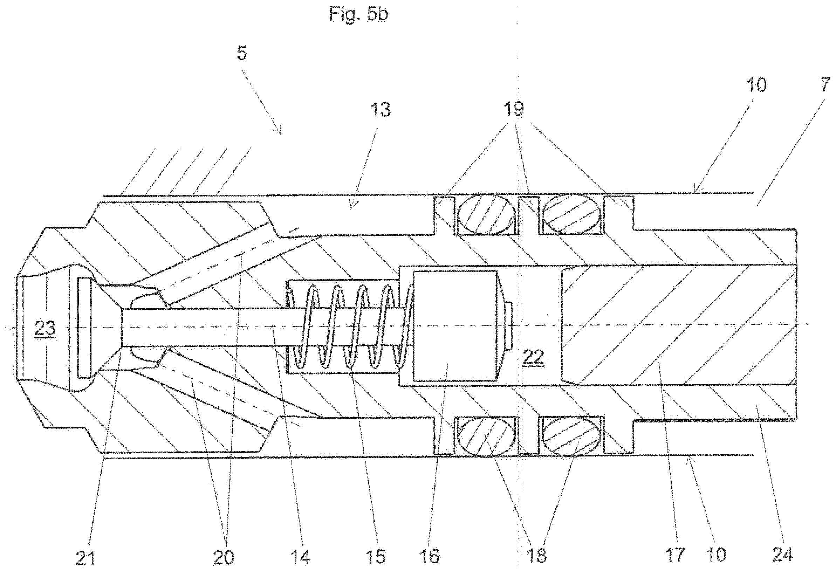

Fig. 5b zeigt eine Variante zu Figur 5a, in welcher der Raum 23 eine weitestgehend birnenförmige, sich zur Vorkammer 3 hin verjüngende Gestalt aufweist. Diese Ausgestaltung ist strömungstechnisch besonders vorteilhaft.

### Liste der verwendeten Bezugszeichen:

- 1: Brennkraftmaschine
- 2: Zylinderkopf
- 3: Vorkammer
- 4: Zündkerzenhülse
- 5: Vorkammergasventil
- 6: Zündkerze
- 7: Kavität
- 8: Kanal
- 9: Überströmbohrung
- 10: Wandung der Kavität 7
- 11: Zündkerzenbohrung
- 12: Gaszufuhrkanal
- 13: Ringkanal
- 14: Ventilnadel
- 15: Ventilfeder
- 16: Kappe
- 17: Stopfen
- 18: O-Ring
- 19: Vorsprung
- 20: Gaskanal
- 21: Untere Kavität des Vorkammergasventils
- 22: Obere Kavität des Vorkammergasventils
- 23: Raum
- 24: Ventilkörper
- S1: Symmetrieachse
- S2: Symmetrieachse

## Patentansprüche

1. Zylinderkopf (2) mit einer Zündkerzenhülse (4) und mit einem Vorkammergasventil (5), wobei die Zündkerzenhülse (4) im Zylinderkopf (2) eingesetzt ist und das Vorkammergasventil (5) in einer Kavität (7) der Zündkerzenhülse (4) aufgenommen ist und ein weitgehend oder vollständig um das Vorkammergasventil (5) verlaufender Ringkanal (13) durch die Wandung (10) der Kavität (7) und die Außenkontur des Vorkammergasventils (5) gebildet wird, wobei der Ringkanal (13) mit wenigstens einem Gaszufuhrkanal (12) in der Zündkerzenhülse (4) zur Versorgung des Vorkammergasventils (5) mit Brenngas verbunden ist und wobei der wenigstens eine Gaszufuhrkanal (12) durch einen horizontalen und eine vertikalen Abschnitt ausgebildet ist, wobei der Ringkanal (13) durch zumindest einen schräg angeordneten Gaskanal (20) mit einer unteren Kavität (21) des Vorkammergasventils (5) verbunden ist.

2. Zylinderkopf (2) nach Anspruch 1, **dadurch gekennzeichnet, dass** der Gaskanal (20) mit einem Winkel zur Symmetrieachse des Ventilkörpers (24) von 20° bis 70° mit einer unteren Kavität (21) des Vorkammergasventils (5) verbunden ist, vorzugsweise mit einem Winkel von 20° bis 30°.

3. Zylinderkopf (2) nach wenigstens einem der vorangegangenen Ansprüche, **dadurch gekennzeichnet, dass** zwischen dem Sitz eines Ventiltellers des Vorkammergasventils (5) und der Einmündung des Vorkammergasventils (5) in eine Vorkammer (3) bzw. zwischen dem Sitz des Ventiltellers des Vorkammergasventils (5) und der Einmündung des Vorkammergasventils (5) in einen zu einer Vorkammer (3) führenden Kanal (8) ein Raum (23) vorgesehen ist.

4. Zylinderkopf (2) nach Anspruch 3, **dadurch gekennzeichnet, dass** der Raum (23) eine weitestgehend birnenförmige, sich zur Vorkammer (3) hin verjüngende Gestalt aufweist.

5. Zylinderkopf (2) nach wenigstens einem der vorangegangenen Ansprüche, **dadurch gekennzeichnet, dass** das Vorkammergasventil (5) an seiner Außenkontur wenigstens einen Vorsprung (19) aufweist, dessen dem Ringkanal (13) zugewandte Flanke den Ringkanal (13) mitbegrenzt und an dessen anderer Flanke ein Dichtmittel zur Abdichtung des Vorkammergasventils (5) gegenüber der Bohrung (10) anliegt.

6. Zylinderkopf (2) nach wenigstens einem der vorangegangenen Ansprüche, **dadurch gekennzeichnet, dass** im Zylinderkopf (2) eine Zündkerze (6) angeordnet ist, wobei die Zündkerze (6) und das Vorkammergasventil (5) in einer gemeinsamen Kavität (7) des Zylinderkopfes (2) angeordnet sind.

7. Zylinderkopf (2) nach Anspruch 6, **dadurch gekennzeichnet, dass** die Zündkerze (6) und das Vorkammergasventil (5) in einander durchdringenden Bohrungen angeordnet sind.

## Claims

1. A cylinder head (2) comprising a spark plug sleeve (4) and a pre-chamber gas valve (5), wherein the spark plug sleeve (4) is fitted into the cylinder head (2) and the pre-chamber gas valve (5) is received by a cavity (7) of the spark plug sleeve (4) and a recess extending substantially or completely around the pre-chamber gas valve (5) forms an annular passage (13) with a wall (10) of the cavity (7), that surrounds the pre-chamber gas valve (5), wherein the annular passage (13) is connected to at least one gas feed passage (12) in the spark plug sleeve (4) for supplying the pre-chamber gas valve (5) with combustion gas, wherein the at least one gas feed passage (12) is afforded by a horizontal and vertical portion, wherein the annular passage (13) is connected with the lower cavity (21) of the pre-chamber gas valve (5) by at least one inclined gas passage (20).

2. A cylinder head (2) as set forth in claim 1 **characterised in that** the gas passage (20) is connected with the lower cavity (21) under an angle between 20° and 70° with respect to the symmetric axis of the valve body (24), preferably under an angle between 20° and 30°.

3. A cylinder head (2) as set forth in at least one of the preceding claims **characterised in that** provided between the seat of a valve head of the pre-chamber gas valve (5) and the mouth opening of the pre-chamber gas valve (5) into a pre-chamber (3) or between the seat of the valve head of the pre-chamber gas valve (5) and the mouth opening of the pre-chamber gas valve (5) into a passage (8) leading to a pre-chamber (3) is a space (23).

4. A cylinder head (2) as set forth in claim 3 **characterised in that** the space (23) is of a substantially pear-shaped configuration which narrows towards the pre-chamber (3).

5. A cylinder head (2) as set forth in at least one of the preceding claims **characterised in that** at its outside contour the pre-chamber gas valve (5) has at least one projection (19) whose flank that is towards the annular passage (13) also delimits the annular passage (13) and against the other flank of which bears a sealing means for sealing off the pre-chamber gas valve (5) with respect to the bore (10).

6. A cylinder head (2) as set forth in at least one of the preceding claims **characterised in that** a spark plug (6) is arranged in the cylinder head (2), wherein the spark plug (6) and the pre-chamber gas valve (5) are arranged in a common cavity (7) of the cylinder head (2).

7. A cylinder head (2) as set forth in claim 6 **characterised in that** the spark plug (6) and the pre-chamber gas valve (5) are arranged in bores which mutually pass through each other.

## Revendications

1. Tête de cylindre (2) avec un manchon de bougie d'allumage (4) et avec une soupape de gaz d'antichambre (5), le manchon de bougie d'allumage (4) étant inséré dans la tête de cylindre (2) et la soupape de gaz d'antichambre (5) étant logée dans une cavité (7) du manchon de bougie d'allumage (4) et un canal annulaire (13) s'étendant largement ou entièrement autour de la soupape de gaz d'antichambre (5) étant constitué à travers la paroi (10) de la cavité (7) et le contour externe de la soupape de gaz d'antichambre (5),
le canal annulaire (13) étant relié avec au moins un canal d'alimentation en gaz (12) dans le manchon de bougie d'allumage (4) pour l'alimentation de la soupape de gaz d'antichambre (5) en gaz de combustion et l'au moins un canal d'alimentation en gaz (12) étant constitué d'une portion horizontale et d'une portion verticale, le canal annulaire (13) étant relié par au moins un canal de gaz (20) disposé en oblique avec une cavité inférieure (21) de la soupape de gaz d'antichambre (5).

2. Tête de cylindre (2) selon la revendication 1, **caractérisée en ce que** le canal de gaz (20) est relié avec une cavité inférieure (21) de la soupape de gaz d'antichambre (5) en formant un angle de 20° à 70° par rapport à l'axe de symétrie du corps de soupape (24), de préférence un angle de 20° à 30°.

3. Tête de cylindre (2) selon au moins l'une des revendications précédentes, **caractérisée en ce que**, entre le siège d'une tête de soupape de la soupape de gaz d'antichambre (5) et l'embouchure de la soupape de gaz d'antichambre (5) dans une antichambre (3) ou entre le siège de la tête de soupape de la soupape de gaz d'antichambre (5) et l'embouchure de la soupape de gaz d'antichambre (5) dans un canal (8) conduisant à une antichambre (3), est prévu un espace (23).

4. Tête de cylindre (2) selon la revendication 3, **caractérisée en ce que** l'espace (23) présente globalement une forme de poire se rétrécissant en direction de l'antichambre (3).

5. Tête de cylindre (2) selon au moins l'une des revendications précédentes, **caractérisée en ce que** la soupape de gaz d'antichambre (5) présente, au niveau de son contour externe, au moins une saillie (19), dont le flanc orienté vers le canal annulaire (13) délimite le canal annulaire (13) et, un moyen d'étanchéité s'appuie contre l'autre flanc de celle-ci pour l'étanchéification de la soupape de gaz d'antichambre (5) par rapport à l'alésage (10).

6. Tête de cylindre (2) selon au moins l'une des revendications précédentes, **caractérisée en ce que**, dans la tête de cylindre (2), est disposée une bougie d'allumage (6), la bougie d'allumage (6) et la soupape de gaz d'antichambre (5) étant disposées dans une cavité (7) commune de la tête de cylindre (2).

7. Tête de cylindre (2) selon la revendication 6, **caractérisée en ce que** la bougie d'allumage (6) et la soupape de gaz d'antichambre (5) sont disposées dans des alésages se traversant les uns les autres.
